# FASCICULE DE BREVET EUROPEEN

(11) **EP 2 113 435 B1**
(45) Date de publication et mention de la délivrance du brevet: **06.09.2017**
(21) Numéro de dépôt: 09158101.7
(22) Date de dépôt: 17.04.2009
(51) Int. Cl.: B60W 20/00, B60K 6/26, B60W 10/06, B60W 10/08, B60W 10/26

(54) **Procédé et dispositif de contrôle d'un stockeur d'énergie pour véhicule hybride**
Verfahren und Vorrichtung zur Steuerung eines Energiespeichers für ein Hybridfahrzeug
Method and device for controlling an energy storage system for a hybrid vehicle

(30) Priorité: 30.04.2008 FR 0852927
(43) Date de publication de la demande: 04.11.2009
(73) Titulaire: PSA Automobiles SA, 78300 Poissy (FR)
(72) Inventeur: Migaud, Melaine, 75012 Paris (FR); Dollinger, Nicolas, 78500 Sartrouville (FR); Robart, Nicolas, 92130 Issy Les Moulineaux (FR); Mercier Calvairac, Fabien, 75010 Paris (FR)

(56) Documents cités:
- EP-A- 1 145 896
- FR-A- 2 902 705
- US-A1- 2008 041 648

## Description

L'invention concerne un procédé et un dispositif de contrôle d'un stockeur d'énergie pour véhicule hybride qui comporte un stockeur électrique et une machine électrique. Le stockeur électrique contribue à satisfaire une demande de surcharge énergétique pour augmenter les performances du véhicule, par exemple en phase d'accélération du véhicule, ou pour optimiser la consommation énergétique du véhicule, en fournissant de l'énergie à la machine électrique qui fonctionne alors en mode moteur pour renforcer ou remplacer le couple du moteur thermique. Le stockeur électrique sert aussi à alimenter certains accessoires qui peuvent consommer de l'énergie indépendamment de l'état de marche du véhicule.

On connaît déjà des systèmes de contrôle d'un stockeur d'énergie pour véhicule hybride. Par exemple, le document US6949897 présente un moyen de gestion de l'énergie électrique permettant un contrôle de l'énergie disponible et où cette énergie de stockage disponible est découpée en plusieurs zones.

Le document EP1110786 propose une gestion de la puissance motrice provenant du moteur électrique et/ou du moteur thermique en fonction des conditions d'utilisation du véhicule, notamment en fonction de sa vitesse.

Le document US7315090 présente un dispositif d'hybridation double parallèle/série d'un véhicule. Il permet de passer d'un mode d'hybridation parallèle à un mode série lors de conditions de roulage à faible vitesse et avec peu de puissance disponible pour améliorer l'efficacité du système de propulsion global.

Le document EP-A-1 145 896 présente un procédé conforme aux caractéristiques du préambule de la revendication 1.

Les procédés et dispositifs de contrôle de l'état antérieur de la technique, n'apportent pas entière satisfaction.

Pour améliorer les procédés et dispositifs de contrôle de l'état antérieur de la technique, un objet de l'invention est un procédé de contrôle d'un stockeur d'énergie pour véhicule hybride qui comporte un stockeur électrique, un moteur thermique et une machine électrique, comprenant une première étape de charge forcée du stockeur électrique, activée lorsque le véhicule est à vitesse non nulle et lorsqu'un état de charge du stockeur est inférieur à un premier seuil, et une deuxième étape d'arrêt de charge forcée du stockeur électrique, activée si au moins l'état de charge du stockeur est supérieur au premier seuil, ce procédé étant remarquable en ce qu'il consiste à protéger une quantité d'énergie déterminée, dite zone bouchon, uniquement dédiée à l'alimentation des auxiliaires durant l'arrêt du moteur thermique ; la taille de cette réserve étant définie par le produit de la puissance moyenne des auxiliaires et la durée statistique d'un arrêt.

Les étapes du procédé, permettent de mieux gérer une chaîne de traction hybride dans les phases de roulage basse vitesse avec un stockeur déchargé, et dans lesquelles la consommation électrique des auxiliaires du réseau de bord devient prépondérante sur l'énergie utilisée pour la traction.

Selon une caractéristique particulière, lorsque le véhicule est roulant, tant que l'énergie contenue dans le stockeur est inférieure à la capacité de la zone bouchon et si l'aptitude de récupération de l'énergie cinétique à la vitesse courante est inférieure à la capacité de la zone bouchon, le moteur thermique est démarré ou maintenu démarré de façon à recharger la zone en priorité.

Selon une caractéristique particulière, la durée statistique d'un arrêt correspond à 90% de la durée moyenne des arrêts.

Avantageusement, le premier seuil est fixé à une valeur d'énergie minimale qui permet un démarrage du véhicule à l'arrêt.

Cette caractéristique de l'invention permet de plus, de garantir au minimum une prestation d'arrêt démarrage à faible état de charge.

Avantageusement aussi, la première étape continue à être activée lorsque le véhicule est à vitesse nulle après activation à vitesse non nulle, tant que l'état de charge est inférieur au premier seuil, et la deuxième étape est activée à la suite de la première étape dès que le premier seuil est atteint si le véhicule est à vitesse nulle.

Cette autre caractéristique de l'invention permet de plus, de minimiser la consommation en réduisant le temps de démarrage moteur lorsque le véhicule est arrêté.

Particulièrement, le moteur thermique fonctionne lorsque la première étape est activée, et le moteur thermique est arrêté lorsque la deuxième étape est activée, au moins si le véhicule est à vitesse nulle.

Avantageusement, une détection de vitesse nulle empêche de déclencher la première étape.

Une telle stratégie améliore l'agrément du véhicule en minimisant les démarrages moteurs alors que le véhicule est arrêté.

Particulièrement aussi, la deuxième étape est activée à la suite de la première étape lorsque l'état de charge est supérieur ou égal à un deuxième seuil supérieur au premier seuil si le véhicule est à vitesse non nulle.

L'hystérésis ainsi générée, permet d'éviter des démarrages arrêts intempestifs au voisinage des franchissements de seuil.

Selon une autre caractéristique particulière, la condition comparant l'état de charge au deuxième seuil défini plus haut crée un hystérésis sur la sortie de la première étape par rapport à l'entrée dans la première étape ; l'hystérésis évitant des démarrages arrêts intempestifs à la limite de la zone bouchon définie par les états de charge inférieur au premier seuil, lorsque la vitesse du véhicule est non nulle.

L'invention a aussi pour objet un dispositif de contrôle d'un stockeur d'énergie pour véhicule hybride qui comporte un stockeur électrique et une machine électrique, agencé pour mettre en oeuvre le procédé de l'invention.

L'invention sera mieux comprise à la lecture de la description qui suit et à l'examen des figures qui l'accompagnent. Ces figures ne sont données qu'à titre illustratif et nullement limitatif de l'invention. Elles montrent :
- figure 1 : une représentation schématique des éléments essentiels d'un véhicule hybride pour mettre en oeuvre l'invention ;
- figure 2 : un logigramme montrant des étapes de procédé conformes à l'invention ;
- figure 3 : un chronogramme d'évolution de la charge d'un stockeur comparée à la vitesse du véhicule.

Les éléments identiques conservent la même référence d'une figure à l'autre.

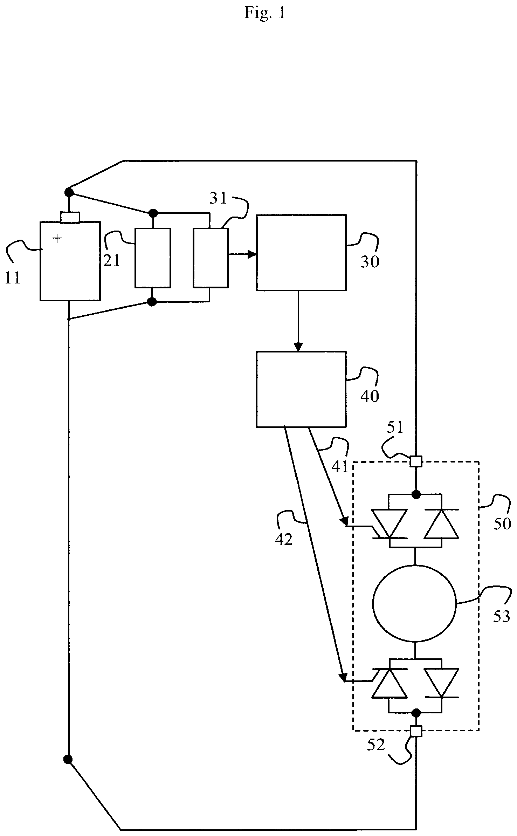

En référence à la figure 1, un véhicule hybride comprend un stockeur électrique 11 constitué d'une batterie, de super capacités ou de tout autre élément apte à stocker de façon réversible de l'énergie électrique. Divers consommateurs électriques 21 tels que les phares d'éclairage, les éléments de chauffage et de climatisation du véhicule, les organes de pilotage de la boîte de vitesses, sont branchés aux bornes du stockeur électrique 11 et consomment l'énergie électrique dont ils ont besoin au moment opportun. Un convertisseur 50 réversible d'énergie électrique en énergie mécanique consomme de l'énergie électrique fournie par le stockeur électrique dans différents cas de vie. Lorsque la force motrice du véhicule est fournie par un moteur thermique, le stockeur électrique peut apporter un complément d'énergie pour améliorer les performances, par exemple en cas d'une demande de surcharge énergétique que l'on peut nommer boost pour la circonstance en hommage au terme en langue étrangère de signification identique pour accélérer le véhicule. Le convertisseur réversible 50 fournit de l'énergie au stockeur électrique notamment lorsque le véhicule est en décélération ou en pente descendante, mais cela ne suffit pas nécessairement à assurer un bilan énergétique nul. Le convertisseur réversible 50 doit aussi fournir de l'énergie électrique pour recharger le stockeur électrique 11 à d'autres moments en mettant à contribution le moteur thermique.

Le convertisseur réversible 50 comprend une borne 51 reliée au pôle positif du stockeur électrique 11 et une borne 52 reliée au pôle négatif du stockeur électrique 11. Entre les bornes 51 et 52, le convertisseur réversible 50 comprend par exemple une machine électrique 53 qui fournit de l'énergie mécanique en mode moteur lorsque le convertisseur réversible 50 est commandé par un élément de signal 41 et absorbe de l'énergie mécanique en mode génératrice pour charger le stockeur électrique 11 lorsque le convertisseur réversible 50 est commandé par un élément de signal 42. Un arbre de transmission couplé à la machine électrique, est couplé de manière conventionnelle, en série ou en parallèle à un moteur thermique non représenté. Les éléments de signaux 41 et 42 sont générés par un module généralement électronique 40. Le module 40 établit les valeurs des éléments de signaux 41 et 42 en fonction d'une consigne de couple à fournir ou à absorber par la machine électrique 53. Pour ce faire, le module 40 reçoit diverses commandes, par exemple des unités de freinage ou des unités d'accélération du véhicule ou encore d'un module généralement électronique 30 qui est agencé pour recevoir un niveau de charge du stockeur 11 depuis un capteur 31 qui, de façon connue, mesure la tension aux bornes du stockeur électrique 11 et estime son impédance à partir d'un courant électrique traversant le stockeur électrique 11. Le module 40 reçoit plus particulièrement un signal 61 de contrôle commande d'un module généralement électronique 60. Le module 60 est agencé pour autoriser de manière contrôlée une décharge du stockeur. Comme nous allons le voir dans la suite de la description, le signal 61 contient une consigne d'énergie ou de puissance à consommer par le convertisseur réversible 50 à partir du stockeur 11 suite à une demande de complément énergétique, reçue par un signal 63, pour augmenter les performances du véhicule ou à une demande d'énergie utilisable, reçue par un signal 62, pour optimiser la consommation énergétique du véhicule.

Une augmentation de performance, par exemple en accélération, consiste généralement à ajouter le couple de la machine électrique au couple du moteur thermique et pousser ainsi l'accélération. Une optimisation de la consommation énergétique du véhicule, par exemple à faible vitesse de déplacement, consiste généralement à utiliser principalement le couple de la machine électrique en allant jusqu'à arrêter le moteur thermique de façon à baisser la consommation de carburant.

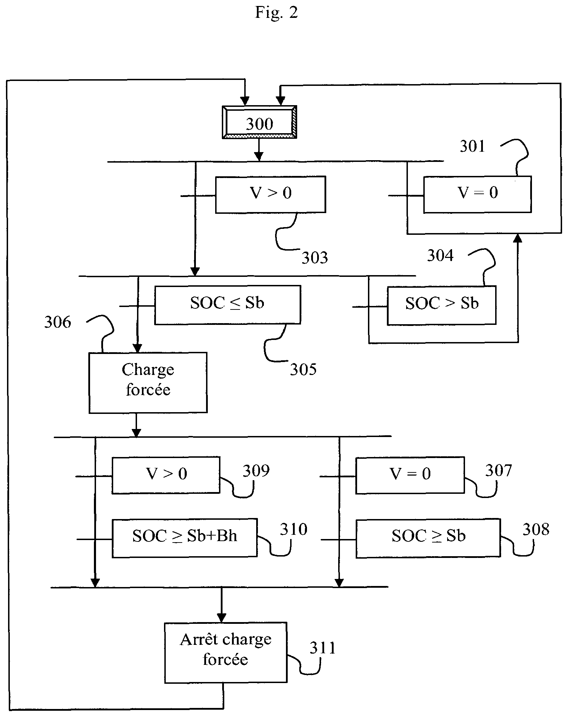

Le module 60 est agencé, par exemple au moyen d'un microprocesseur et d'une mémoire numérique ou analogique, pour exécuter le procédé expliqué à présent en référence à la figure 2.

En référence à la figure 2, le procédé de contrôle comprend une étape initiale 300 de référence dans laquelle la charge du stockeur se fait naturellement en fonction des modes de marche, par exemple récupération en freinage. A partir de l'étape 300, une détection de vitesse nulle valide une transition 301 et une détection de vitesse non nulle valide une transition 303. A la suite de la transition 303, une détection d'état de charge (SOC pour state of charge) du stockeur, supérieur à un premier seuil Sb, valide une transition 304 et une détection d'état de charge SOC du stockeur, inférieur ou égal au premier seuil Sb, valide une transition 305.

Une validation des transitions 303 et 305 active une première étape 306 de charge forcée du stockeur électrique. Dans l'étape 306, la charge du stockeur est forcée, par exemple en faisant fonctionner le moteur thermique pour fournir un couple supérieur au couple nécessaire à mouvoir le véhicule si le moteur thermique fonctionne déjà pour contribuer à la propulsion. En d'autres termes, on force la marche de la machine électrique en mode génératrice qui provoque un appel d'énergie du moteur thermique. Si le moteur thermique ne fonctionne pas, par exemple lorsque la traction est assurée par la machine électrique en mode moteur, on démarre le moteur thermique lorsque la première étape 306 est activée. Le premier seuil est préférentiellement fixé à une valeur d'énergie minimale qui permet un démarrage du véhicule à l'arrêt.

L'arrêt de la charge forcée, est réalisé dans une deuxième étape 311 en cessant de forcer le mode génératrice de la machine électrique. En particulier, si le moteur thermique fonctionne uniquement pour charger le stockeur, le moteur thermique est arrêté. Une activation de l'étape 311 ne peut être déclenchée que si l'état de charge SOC du stockeur est supérieur au premier seuil Sb. Cette condition est vérifiée par une transition 308 qui est validée dès que l'état de charge est supérieur ou égal au seuil Sb. Cette condition est aussi vérifiée par une transition 310 qui est validée dès que l'état de charge est supérieur ou égal à un deuxième seuil qui est supérieur au premier seuil. Le deuxième seuil est par exemple égal au premier seuil Sb augmenté d'une valeur de bande morte Bh. La condition de la transition 310 sur le deuxième seuil Sb+Bh crée alors un hystérésis sur la sortie de l'étape 306 par rapport à l'entrée dans l'étape 306 qui est conditionnée par la transition 305.

L'hystérésis évite des démarrages arrêt intempestif à la limite d'une zone bouchon définie par les états de charge inférieur au premier seuil, lorsque la vitesse du véhicule est non nulle. La vitesse non nulle du véhicule est alors vérifiée par une transition 309 de sorte que l'étape 311 est activée à la suite de l'étape 306 lorsque la transition 309 et la transition 310 sont validées.

Une transition 307 validée lorsque la vitesse du véhicule est nulle est vérifiée avec la transition 308. De cette manière, la première étape 306 continue à être activée lorsque le véhicule est à vitesse nulle après activation à vitesse non nulle, tant que l'état de charge SOC est inférieur au premier seuil Sb et la deuxième étape 311 est activée à la suite de la première étape 306 dès que le premier seuil est atteint si le véhicule est à vitesse nulle. Le moteur thermique est alors arrêté lorsque la deuxième étape 311 est activée, au moins si le véhicule est à vitesse nulle.

Une détection de vitesse nulle valide aussi une transition 301 qui empêche de déclencher la première étape 306 en rebouclant sur l'étape 300. Lorsque la vitesse est non nulle, une transition 304 validée par une détection d'état de charge supérieur au premier seuil Sb, reboucle elle aussi sur l'étape 300. Enfin, l'étape 311 reboucle directement sur l'étape 300 de façon à revenir en mode normal, c'est-à-dire non forcé de la charge ou de la décharge du stockeur.

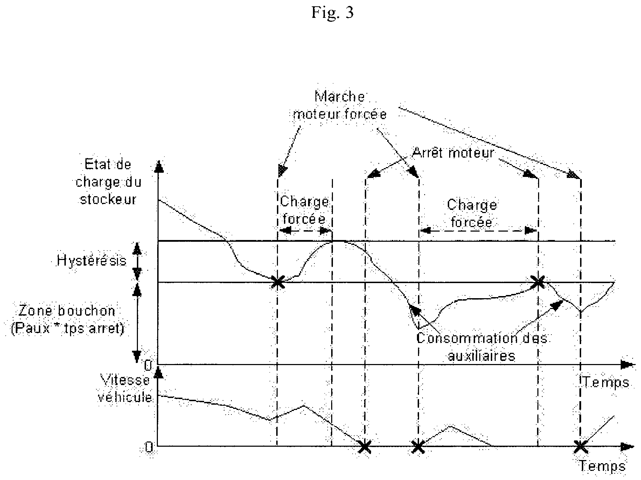

En référence à la figure 3, l'optimum énergétique consiste à arrêter et à maintenir coupé le moteur thermique lors des phases d'arrêt du véhicule. Ceci n'est possible que si le stockeur hybride contient suffisamment d'énergie pour alimenter les auxiliaires électriques du véhicule, seuls consommateurs durant l'arrêt.

L'invention consiste à protéger une quantité d'énergie « zone bouchon » uniquement dédiée à l'alimentation des auxiliaires durant l'arrêt. La taille de cette réserve est définie par le produit de la puissance moyenne des auxiliaires et la durée statistique d'un arrêt, par exemple 90% de la durée moyenne des arrêts par exemple.

Lorsque le véhicule est roulant, tant que l'énergie contenue dans le stockeur est inférieure à la capacité de la zone bouchon et si l'aptitude de récupération de l'énergie cinétique à la vitesse actuelle est inférieure à la capacité de la zone bouchon, le moteur thermique est démarré ou maintenu démarré de façon à recharger la zone en priorité.

Dès que la vitesse du véhicule est nulle et que la zone bouchon est remplie, le moteur thermique est coupé.

Lors du décollage véhicule, le moteur est forcé démarré au minimum jusqu'à ce que la zone bouchon soit re-remplie.

Dans le cas particulier où l'énergie vient à manquer durant un arrêt, on peut démarrer le moteur thermique de façon à recharger la zone bouchon. L'arrêt moteur est de nouveau possible dès que la zone bouchon est remplie.

## Revendications

1. Procédé de contrôle d'un stockeur d'énergie pour véhicule hybride qui comporte un stockeur électrique, un moteur thermique et une machine électrique, comprenant :
- une première étape (306) de charge forcée du stockeur électrique, activée lorsque le véhicule est à vitesse non nulle et lorsqu'un état de charge (SOC) du stockeur est inférieur à un premier seuil (Sb) ; et
- une deuxième étape (311) d'arrêt de charge forcée du stockeur électrique, activée si au moins l'état de charge (SOC) du stockeur est supérieur au premier seuil (Sb), ledit procédé étant **caractérisé en ce qu'**il consiste à protéger une quantité d'énergie déterminée, dite zone bouchon, uniquement dédiée à l'alimentation des auxiliaires durant l'arrêt du moteur thermique ; la taille de cette réserve étant définie par le produit de la puissance moyenne des auxiliaires et la durée statistique d'un arrêt.

2. Procédé selon la revendication 1, **caractérisé en ce que** lorsque le véhicule est roulant, tant que l'énergie contenue dans le stockeur est inférieure à la capacité de la zone bouchon et si l'aptitude de récupération de l'énergie cinétique à la vitesse courante est inférieure à la capacité de la zone bouchon, le moteur thermique est démarré ou maintenu démarré de façon à recharger la zone en priorité.

3. Procédé selon l'une des revendications précédentes, **caractérisé en ce que** la durée statistique d'un arrêt correspond à 90% de la durée moyenne des arrêts.

4. Procédé selon l'une des revendications précédentes, dans lequel :
- le premier seuil est fixé à une valeur d'énergie minimale qui permet un démarrage du véhicule à l'arrêt.

5. Procédé selon l'une des revendications précédentes, dans lequel :
- la première étape (306) continue à être activée lorsque le véhicule est à vitesse nulle après activation à vitesse non nulle, tant que l'état de charge (SOC) est inférieur au premier seuil (Sb) ; et
- la deuxième étape (311) est activée à la suite de la première étape (306) dès que le premier seuil est atteint si le véhicule est à vitesse nulle.

6. Procédé selon l'une des revendications précédentes, dans lequel :
- le moteur thermique fonctionne lorsque la première étape (306) est activée ; et
- le moteur thermique est arrêté lorsque la deuxième étape (311) est activée, au moins si le véhicule est à vitesse nulle.

7. Procédé selon l'une des revendications précédentes, dans lequel :
- une détection de vitesse nulle empêche de déclencher la première étape (306).

8. Procédé selon l'une des revendications précédentes, dans lequel :
- la deuxième étape (311) est activée à la suite de la première étape (306) lorsque l'état de charge (SOC) est supérieur ou égal à un deuxième seuil (Sb+Bh) supérieur au premier seuil (Sb) si le véhicule est à vitesse non nulle.

9. Procédé selon la revendication 8, **caractérisé en ce que** la condition (308), comparant l'état de charge (SOC) au deuxième seuil (Sb+Bh), crée un hystérésis sur la sortie de la première étape (306) par rapport à l'entrée dans la première étape (306) ; ledit hystérésis évitant des démarrages arrêts intempestifs à la limite de la zone bouchon définie par les états de charge inférieur au premier seuil, lorsque la vitesse du véhicule est non nulle.

10. Dispositif de contrôle d'un stockeur d'énergie pour véhicule hybride qui comporte un stockeur électrique (11) et une machine électrique (53), agencé pour mettre en oeuvre le procédé selon l'une des revendications précédentes.

## Patentansprüche

1. Verfahren zum Steuern eines Energiespeichers für Hybridfahrzeug, das einen Stromspeicher, eine Brennkraftmaschine und eine elektrische Maschine umfasst, umfassend:
- einen ersten Schritt (306) zum forcierten Laden des Stromspeichers, der aktiviert wird, wenn das Fahrzeug eine Geschwindigkeit nicht gleich null hat und wenn der Ladezustand (SOC) des Speichers niedriger ist als ein erster Schwellenwert (Sb), und
- einen zweiten Schritt (311) des Stoppens des forcierten Ladens des Stromspeichers, der aktiviert wird, falls mindestens der Ladezustand (SOC) des Speichers größer ist als der erste Schwellenwert (Sb), Verfahren **dadurch gekennzeichnet, dass** es darin besteht, eine bestimmte Energiemenge, Stopfenzone genannt, zu schützen, die nur der Versorgung der Hilfsvorrichtungen während des Stillstands der Brennkraftmaschine gewidmet ist, wobei die Größe dieser Reserve von dem Produkt der mittleren Leistung der Hilfsvorrichtungen und der statistischen Dauer eines Stillstands definiert ist.

2. Verfahren nach Anspruch 1, **dadurch gekennzeichnet, dass**, wenn das Fahrzeug fährt, solange die Energie, die in dem Speicher enthalten ist, niedriger ist als die Kapazität der Stopfenzone, und falls die Eignung zur Rückgewinnung der kinetischen Energie bei der aktuellen Geschwindigkeit niedriger ist als die Kapazität der Stopfenzone, die Brennkraftmaschine angelassen wird oder angelassen gehalten wird, um die Zone vorrangig aufzuladen.

3. Verfahren nach einem der vorhergehenden Ansprüche, **dadurch gekennzeichnet, dass** die statistische Dauer eines Stillstands 90 % der mittleren Dauer der Stillstände entspricht.

4. Verfahren nach einem der vorhergehenden Ansprüche, wobei:
- der erste Schwellenwert auf einen minimalen Energiewert festgelegt ist, der ein Anlassen des Fahrzeugs im Stillstand erlaubt.

5. Verfahren nach einem der vorhergehenden Ansprüche, wobei:
- der erste Schritt (306) weiterhin aktiviert wird, während das Fahrzeug nach dem Aktivieren bei einer Geschwindigkeit nicht gleich null eine Geschwindigkeit gleich null hat, solange der Ladezustand (SOC) niedriger ist als der erste Schwellenwert (Sb), und
- der zweite Schritt (311) im Anschluss an den ersten Schritt (306) aktiviert wird, sobald der erste Schwellenwert erreicht ist, falls das Fahrzeug eine Geschwindigkeit gleich null hat.

6. Verfahren nach einem der vorhergehenden Ansprüche, bei dem:
- die Brennkraftmaschine in Betrieb ist, wenn der erste Schritt (306) aktiviert wird, und
- die Brennkraftmaschine gestoppt ist, wenn der zweite Schritt (311) aktiviert wird, mindestens falls das Fahrzeug eine Geschwindigkeit gleich null hat.

7. Verfahren nach einem der vorhergehenden Ansprüche, wobei:
- ein Erfassen einer Geschwindigkeit gleich null das Auslösen des ersten Schritts (306) verhindert.

8. Verfahren nach einem der vorhergehenden Ansprüche, wobei:
- der zweite Schritt (311) im Anschluss an den ersten Schritt (306) aktiviert wird, wenn der Ladezustand (SOC) größer oder gleich einem zweiten Schwellenwert (Sb+Bh) ist, der größer ist als der erste Schwellenwert (Sb), falls das Fahrzeug eine Geschwindigkeit nicht gleich null hat.

9. Verfahren nach Anspruch 8, **dadurch gekennzeichnet, dass** die Bedingung (308), die den Ladezustand (SOC) mit dem zweiten Schwellenwert (Sb+Bh) vergleicht, eine Hysterese auf dem Ausgang des ersten Schritts (306) in Bezug auf das Eintreten in den ersten Schritt (306) schafft, wobei die Hysterese ungelegenes Anlassen - Stoppen an der Grenze der Stopfenzone, die durch die Ladezustände unter dem ersten Schwellenwert definiert ist, vermeidet, wenn die Geschwindigkeit des Fahrzeugs nicht gleich null ist.

10. Steuervorrichtung eines Energiespeichers für Hybridfahrzeug, das einen Stromspeicher (11) und eine elektrische Maschine (53) umfasst, die eingerichtet ist, um das Verfahren nach einem der vorhergehenden Ansprüche umzusetzen.

## Claims

1. A method for controlling an energy storage system for a hybrid vehicle, which comprises an electrical storage system, a heat engine and an electric machine, including:
- a first step (306) of forced charging of the electric storage system, activated when the vehicle is at a non-zero speed and when a charge state (SOC) of the storage system is less than a first threshold (Sb); and
- a second step (311) of stoppage of forced charge of the electric storage system, activated if at least the charge state (SOC) of the storage system is greater than the first threshold (Sb), said method being **characterized in that** it consists in protecting a specified quantity of energy, designated buffer zone, solely dedicated to the supply of the auxiliary equipment during the stoppage of the heat engine; the extent of this reserve being defined by the product of the average power of the auxiliary equipment and the statistical duration of a stoppage.

2. The method according to Claim 1, **characterized in that** when the vehicle is running, as long as the energy contained in the storage system is less than the capacity of the buffer zone and if the capability for recovery of the kinetic energy at the current speed is less than the capacity of the buffer zone, the heat engine is started up or kept started so as to recharge the zone as a priority.

3. The method according to one of the preceding claims, **characterized in that** the statistical duration of a stoppage corresponds to 90% of the average duration of the stoppages.

4. The method according to one of the preceding claims, in which:
- the first threshold is fixed at a minimum energy value which permits a starting up of the stopped vehicle.

5. The method according to one of the preceding claims, in which:
- the first step (306) continues to be activated when the vehicle is at zero speed after activation at non-zero speed, as long as the charge state (SOC) is less than the first threshold (Sb); and
- the second step (311) is activated following the first step (306) as soon as the first threshold is reached, if the vehicle is at zero speed.

6. The method according to one of the preceding claims, in which:
- the heat engine functions when the first step (306) is activated; and
- the heat engine is stopped when the second step (311) is activated, at least if the vehicle is at zero speed.

7. The method according to one of the preceding claims, in which:
- a detection of zero speed prevents triggering the first step (306).

8. The method according to one of the preceding claims, in which:
- the second step (311) is activated following the first step (306) when the charge state (SOC) is greater than or equal to a second threshold (Sb+Bh) greater than the first threshold (Sb) if the vehicle is at non-zero speed.

9. The method according to Claim 8, **characterized in that** the condition (308), comparing the charge state (SOC) to the second threshold (Sb+Bh), creates a hysteresis on the exit of the first step (306) with respect to the entry into the first step (306); said hysteresis preventing untimely start-ups and stoppages at the limit of the buffer zone defined by the charge states less than the first threshold, when the speed of the vehicle is non-zero.

10. The device for controlling an energy storage system for a hybrid vehicle, which comprises an electrical energy storage system (11) and an electric machine (53), arranged to implement the method according to one of the preceding claims.
